# EUROPÄISCHE PATENTSCHRIFT

(11) **EP 3 499 020 B1**
(45) Veröffentlichungstag und Bekanntmachung des Hinweises auf die Patenterteilung: **25.08.2021**
(21) Anmeldenummer: 17207046.8
(22) Anmeldetag: 13.12.2017
(51) Int. Cl.: F03D 1/06, F03D 80/40, F03D 80/30

(54) **ROTORBLATTSCHALE FÜR EIN ROTORBLATT UND VERFAHREN ZUM HERSTELLEN EINER ROTORBLATTSCHALE FÜR EIN ROTORBLATT**
ROTOR BLADE SHELL AND METHOD FOR PRODUCING A ROTOR BLADE SHELFOR A ROTOR BLADE
COUQEU DE PALE DE ROTOR POUR UNE PALE DE ROTOR ET PROCÉDÉ DE FABRICATION D'UN COQUE DE PALE DE ROTOR POUR UNE PALE DE ROTOR

(43) Veröffentlichungstag der Anmeldung: 19.06.2019
(73) Patentinhaber: Nordex Energy SE & Co. KG, 22419 Hamburg (DE)
(72) Erfinder: Baars, Peter, 23974 Krusenhagen (DE); Ohlerich, Nick, 18055 Rostock (DE); Kremer, Jochen, 22299 Hamburg (DE)
(74) Vertreter: Epping - Hermann - Fischer

(56) Entgegenhaltungen:
- EP-A1- 3 130 800
- WO-A1-00/79128
- WO-A1-2005/026538
- WO-A1-2014/023734
- DE-A1-102016 001 734

## Beschreibung

Die Erfindung betrifft eine Rotorblattschale für ein Rotorblatt einer Windenergieanlage. Darüber hinaus wird ein Verfahren zum Herstellen einer Rotorblattschale für ein Rotorblatt einer Windenergieanlage beschrieben.

Windenergieanlagen werden verwendet, um die Energie einer Luftströmung in elektrische Energie umzuwandeln, beispielsweise die Energie des Windes. Dazu weisen sie herkömmlich ein Rotorblatt oder mehrere Rotorblätter auf. Ein Rotorblatt weist typischerweise eine äußere Hülle oder Rotorblattschale auf, die aus einem oder mehreren Verbundwerkstoffen oder Verbundlaminaten hergestellt ist. An einem Rotorblatt einer Windenergieanlage können zwei oder mehrere elektrisch leitfähige Komponenten vorgesehen sein.

WO 2014/023734 A1 betrifft ein Rotorblatt einer Windenergieanlage umfassend eine im Rotorblatt im Bereich seiner Rotorblattoberfläche angeordnete Heizvorrichtung zum Beheizen des Rotorblattes, wobei die Heizvorrichtung elektrisch leitfähige Heizstränge aufweist. Die Heizstränge sind mittels einer Funkenstrecke mit einer Blitzableitervorrichtung verbunden.

WO 2005/026538 A1 betrifft den Blitzschutz eines Rotorblatts einer Windenergieanlage. Ein metallischer Rezeptor dient als primäres Blitzfanggerät und verringert das Risiko, dass ein Blitz auf das Laminat des Rotorblatts einschlägt.

Es ist wünschenswert, eine Rotorblattschale für ein Rotorblatt einer Windenergieanlage anzugeben, die einen sicheren Betrieb auch mit elektrisch leitfähigen Komponenten ermöglicht. Zudem ist es wünschenswert, ein Verfahren zum Herstellen einer Rotorblattschale für ein Rotorblatt einer Windenergieanlage anzugeben, das eine einfache Herstellung ermöglicht.

Diese Aufgabe wird gelöst durch die Rotorblattschale mit den Merkmalen des Anspruchs 1. Vorteilhafte Ausgestaltungen sind in den sich anschließenden Unteransprüchen angegeben.

Eine erfindungsgemäße Rotorblattschale für ein Rotorblatt einer Windenergieanlage weist gemäß zumindest einer Ausführungsform einen Rotorblattschalenkörper mit einer Aussparung auf. Der Rotorblattschalenkörper umgibt einen Innenraum. Der Rotorblattschalenkörper weist eine dem Innenraum abgewandte Außenseite auf. Die Rotorblattschale weist eine Überspannungsschutzvorrichtung auf. Die Überspannungsvorrichtung weist einen ersten Anschluss und einen zweiten Anschluss auf.

Die Überspannungsschutzvorrichtung ist gemäß zumindest einem Ausführungsbeispiel vollständig innerhalb der Aussparung angeordnet und von der Außenseite der Rotorblattschale her elektrisch kontaktierbar. Beispielsweise ist die Überspannungsschutzvorrichtung so in der Aussparung angeordnet, dass die beiden Anschlüsse der Außenseite zugewandt sind, um die Überspannungsschutzvorrichtung von der Außenseite der Rotorblattschale her elektrisch zu kontaktieren.

Die Überspannungsschutzvorrichtung dient insbesondere zum kontrollierten Potentialausgleich zwischen zwei oder mehreren elektrisch leitfähigen Komponenten des Rotorblatts der Windenergieanlage. Beispielsweise weist die Überspannungsschutzvorrichtung eine Funkenstrecke auf, insbesondere eine Trennfunkenstrecke. Auch andere Implementierungen der Überspannungsschutzvorrichtung sind möglich, beispielsweise auf Halbleiterbasis.

Die Rotorblattschale weist die Überspannungsschutzvorrichtung auf, die in den Rotorblattschalenkörper integriert ist. Die Anschlüsse der Überspannungsvorrichtung sind von außen kontaktierbar. Somit ergibt sich ein freier Innenraum ohne Anschlüsse und Kabel für die Überspannungsschutzvorrichtung.

Die von außen zugänglichen Anschlüsse der Überspannungsschutzvorrichtung ermöglichen eine einfache Herstellung der Rotorblattschale und eine einfache Kontaktierung der Überspannungsschutzvorrichtung von außerhalb des Rotorblatts. Beispielsweise im Servicefall oder für Wartungsarbeiten ist die Überspannungsschutzvorrichtung somit gut zugänglich. Die Rotorblattschale muss nicht komplett durchtrennt werden, um die Anschlüsse der Überspannungsschutzvorrichtung zu erreichen. Insbesondere ist es möglich, sämtliche Kontaktierungen von außen zu setzen und zu warten. Ein Tausch einer defekten
Überspannungsschutzvorrichtung ist ebenfalls von außen möglich, insbesondere ohne die gesamte Rotorblattschale öffnen zu müssen. Zudem ist eine nachträgliche Montage der Überspannungsschutzvorrichtung am fertigen Rotorblatt von außen möglich. Innerhalb des Rotorblatts wird somit die Zahl von Anschlusskabeln reduziert. Damit reduziert sich auch der Montageaufwand. Somit wird das Risiko verringert, dass die Verkabelung durch Harzreste beschädigt wird. Herkömmliche blattinterne Verkabelungen sind beispielsweise einem Risiko ausgesetzt, in dem sie durch Harzreste innerhalb des Rotorblatts beschädigt werden. Zudem ist es möglich, auf eine zusätzliche Schutzabdeckung für die Überspannungsvorrichtung zu verzichten.

Die Überspannungsschutzvorrichtung ist gemäß zumindest einem weiteren Ausführungsbeispiel vollständig innerhalb der Aussparung angeordnet und von der Innenseite der Rotorblattschale her elektrisch kontaktierbar. Beispielsweise ist die Überspannungsschutzvorrichtung so in der Aussparung angeordnet, dass die beiden Anschlüsse dem Innenraum zugewandt sind, um die
Überspannungsschutzvorrichtung von dem Innenraum der Rotorblattschale her elektrisch zu kontaktieren.

Dies ermöglicht eine einfache Herstellung der Rotorblattschale und eine einfache Kontaktierung der Überspannungsschutzvorrichtung von innerhalb des Rotorblatts, insbesondere in blattwurzelnahen Bereichen, in denen das Rotorblatt beispielsweise im Servicefall oder für Wartungsarbeiten von innen leicht zugänglich ist. Ein Tausch einer defekten Überspannungsschutzvorrichtung ist ebenfalls von außen möglich, insbesondere ohne die gesamte Rotorblattschale öffnen zu müssen. Zudem ist eine nachträgliche Montage der Überspannungsschutzvorrichtung am fertigen Rotorblatt von außen möglich. Zudem ist es möglich, auf eine zusätzliche Schutzabdeckung für die Überspannungsvorrichtung zu verzichten.

Gemäß zumindest einer Ausführungsform weist der Rotorblattschalenkörper eine Innenschalenlage auf. Die Innenschalenlage ist auf einer dem Innenraum zugewandten Innenseite des Rotorblattschalenkörpers angeordnet. Die Innenschalenlage bedeckt die Überspannungsvorrichtung zum Innenraum vollständig. Somit ist der Innenraum von der Überspannungsschutzvorrichtung baulich getrennt. Es sind keine Durchführungen für Kabelanschlüsse oder ähnliches notwendig. Die Innenschalenlage ist durchgängig ausgebildet und bedeckt sowohl den Rotorblattschalenkörper als auch die Überspannungsschutzvorrichtung in Richtung zum Innenraum. Gemäß zumindest einer Ausführungsform weist der Rotorblattschalenkörper eine Außenschalenlage auf. Die Außenschalenlage ist an der Außenseite des Rotorblattschalenkörpers angeordnet. Die Außenschalenlage ist bereichsweise unterbrochen zum elektrischen Kontaktieren der Überspannungsschutzvorrichtung. Die Unterbrechungen beziehungsweise Aussparungen in der Außenschalenlage ermöglichen die Kontaktierung der
Überspannungsschutzvorrichtung von außerhalb des Rotorblatts. Die Anschlüsse sind durch die Außenschalenlage hindurch von außerhalb kontaktierbar.

Gemäß zumindest einer Ausführungsform weist die Rotorblattschale einen ersten und einen zweiten Kontakt auf. Der erste und der zweite Kontakt sind beispielsweise jeweils als Kontaktstifte ausgebildet. Der erste Kontakt reicht von der Außenseite der Rotorblattschale durch die Außenschalenlage zum ersten Anschluss. Der zweite Kontakt reicht von der Außenseite der Rotorblattschale durch die Außenschalenlage zum zweiten Anschluss. Somit ist eine Kontaktierung der Überspannungsschutzvorrichtung von außerhalb der Rotorblattschale möglich.

Gemäß zumindest einer Ausführungsform weist die Rotorblattschale einen ersten Leiter und einen zweiten Leiter auf. Der erste Leiter und der zweite Leiter sind jeweils auf der Außenseite der Rotorblattschale angeordnet. Der erste Leiter ist mit dem ersten Anschluss elektrisch verbunden. Der zweite Leiter ist mit dem zweiten Anschluss elektrisch verbunden. Der erste und der zweite Leiter sind jeweils einer elektrisch leitfähigen Komponente des Rotorblatts beziehungsweise der Rotorblattschale zugeordnet. Der erste und der zweite Leiter verlaufen jeweils auf der Außenseite der Rotorblattschale. Der erste und der zweite Leiter kontaktieren die Überspannungsschutzvorrichtung von außen. Somit kann auf eine Leitungsführung im Innenraum des Rotorblatts verzichtet werden.

Gemäß zumindest einer Ausführungsform bedeckt die Außenschalenlage die Überspannungsvorrichtung an der Außenseite vollständig. Es sind keine Durchführungen für Kabelanschlüsse oder ähnliches notwendig. Die Außenschalenlage ist durchgängig ausgebildet und bedeckt sowohl den Rotorblattschalenkörper als auch die Überspannungsschutzvorrichtung in Richtung zur Außenseite.

Gemäß zumindest einer Ausführungsform ist die Innenschalenlage bereichsweise unterbrochen zum elektrischen Kontaktieren der Überspannungsschutzvorrichtung. Die Unterbrechungen beziehungsweise Aussparungen in der Innenschalenlage ermöglichen die Kontaktierung der Überspannungsschutzvorrichtung von innerhalb des Rotorblatts. Die Anschlüsse sind durch die Innenschalenlage hindurch vom Innenraum her kontaktierbar.

Gemäß zumindest einer Ausführungsform reicht der erste Kontakt von der Innenseite der Rotorblattschale durch die Innenschalenlage zum ersten Anschluss. Der zweite Kontakt reicht von der Innenseite der Rotorblattschale durch die Innenschalenlage zum zweiten Anschluss. Somit ist eine Kontaktierung der Überspannungsschutzvorrichtung von innerhalb der Rotorblattschale möglich.

Gemäß zumindest einer Ausführungsform sind der erste Leiter und der zweite Leiter jeweils auf der Innenseite der Rotorblattschale angeordnet. Der erste Leiter ist mit dem ersten Anschluss elektrisch verbunden. Der zweite Leiter ist mit dem zweiten Anschluss elektrisch verbunden. Der erste und der zweite Leiter sind jeweils einer elektrisch leitfähigen Komponente des Rotorblatts beziehungsweise der Rotorblattschale zugeordnet. Der erste und der zweite Leiter verlaufen jeweils auf der Innenseite der Rotorblattschale. Der erste und der zweite Leiter kontaktieren die Überspannungsschutzvorrichtung von innen. Somit kann auf eine Leitungsführung auf der Außenseite des Rotorblatts verzichtet werden.

Gemäß zumindest einer Ausführungsform ist der erste Anschluss mit einem Blitzableiter für das Rotorblatt elektrisch verbunden. Der zweite Anschluss ist mit einer Heizeinrichtung für das Rotorblatt elektrisch verbunden. Somit ist ein Potentialausgleich zwischen dem Blitzableiter und der Heizeinrichtung möglich. Auch andere elektrische Komponenten können alternativ oder zusätzlich vorgesehen sein und mit dem Überspannungsschutz verbunden sein. Beispielsweise hat die Überspannungsschutzvorrichtung drei oder mehr Anschlüsse.

Gemäß zumindest einer Ausführungsform weist die Überspannungsschutzvorrichtung einen Einleger und eine Elektronikbaugruppe auf. Der Einleger ist in der Aussparung des Rotorblattschalenkörpers angeordnet. Der Einleger ist von dem Rotorblattschalenkörper mechanisch gehalten. Die Elektronikbaugruppe ist in dem Einleger angeordnet. Die Elektronikbaugruppe weist den ersten Anschluss sowie den zweiten Anschluss auf. Es können auch zwei oder mehr Elektronikbaugruppen in dem Einleger angeordnet sein. Der Einleger und die Elektronikbaugruppe können zwei zunächst separate Bauelemente sein. Somit ist es möglich, die Elektronikbaugruppe, beispielsweise die
Funkenstreckeneinheit, nicht während der Rotorblattschalenfertigung einzusetzen. Stattdessen ist eine nachträgliche Montage am fertigen Rotorblatt von außen möglich. Der Einleger ist während der Herstellung des Rotorblattschalenkörpers in diesen eingesetzt. Es müssen beispielsweise keine Kabelanschlüsse im
Rotorblattschalenkörper vorgesehen sein.

Die oben genannte Aufgabe wird ebenfalls gelöst durch das Verfahren mit den Merkmalen des Anspruchs 15. Vorteilhafte Ausgestaltungen sind in den sich anschließenden Unteransprüchen angegeben.

Das Verfahren zum Herstellen einer Rotorblattschale für ein Rotorblatt einer Windenergieanlage umfasst ein Bereitstellen eines Rotorblattschalenkörpers, welcher ein Kernmaterial mit einer Aussparung aufweist. Eine Überspannungsschutzvorrichtung wird in die Aussparung eingebracht. Die Überspannungsschutzvorrichtung und das Kernmaterial werden auf einer einem Innenraum des Rotorblatts zugewandten Innenseite des Rotorblattschalenkörpers mit einer Innenschalenlage abgedeckt. Auf einer gegenüberliegenden Außenseite werden die Überspannungsschutzvorrichtung und das Kernmaterial mit einer Außenschalenlage abgedeckt.

Die Überspannungsschutzvorrichtung wird gemäß einer Ausführungsform von der Außenseite her kontaktiert. Somit ist eine Rotorblattschale für ein Rotorblatt einfach und zuverlässig herstellbar, die eine
Überspannungsschutzvorrichtung aufweist.

Die Überspannungsschutzvorrichtung wird gemäß einer weiteren Ausführungsform von der Innenseite her kontaktiert. Somit ist eine Rotorblattschale für ein Rotorblatt einfach und zuverlässig herstellbar, die eine
Überspannungsschutzvorrichtung aufweist.

Die beschriebenen Merkmale und Vorteile der erfindungsgemäßen Rotorblattschale gelten auch für das Verfahren und umgekehrt.

Gemäß zumindest einer Ausführungsform umfasst das Einbringen der Überspannungsschutzvorrichtung in die Aussparung ein Bereitstellen der Überspannungsschutzvorrichtung als eigenständiges Bauelement. Das Bauelement wird in die Aussparung eingesetzt, sodass das Bauelement mit dem Kernmaterial in Kontakt ist. Die Überspannungsschutzeinrichtung, das Kernmaterial, die Innenschalenlage und die Außenschalenlage werden durch ein Vakuuminfusionsverfahren verbunden. Somit wird die Überspannungsschutzvorrichtung als fertiges Bauteil in das Kernmaterial beziehungsweise den Rotorblattschalenkörper eingebettet. Somit ist ein geringer Montageaufwand realisierbar. Zudem ist eine robuste Überspannungsschutzvorrichtung realisierbar.

Gemäß zumindest einer Ausführungsform umfasst das Einbringen der Überspannungsschutzvorrichtung ein Bereitstellen eines Einlegers. Der Einleger wird in die Aussparung eingesetzt, sodass der Einleger mit dem Kernmaterial in Kontakt ist. Der Einleger, das Kernmaterial, die Innenschalenlage und die Außenschalenlage werden durch ein Vakuuminfusionsverfahren verbunden. Eine Elektronikbaugruppe wird bereitgestellt.

Die Elektronikbaugruppe wird gemäß zumindest einer Ausführungsform in den Einleger eingesetzt, nachdem die Außenschalenlage von der Außenseite der Rotorblattschale geöffnet wurde.

Die Elektronikbaugruppe wird gemäß zumindest einer weiteren Ausführungsform in den Einleger eingesetzt, nachdem die Innenschalenlage von der Innenseite der Rotorblattschale geöffnet wurde.

Der Einleger und die Elektronikbaugruppe sind zwei zunächst separat zueinander ausgebildete Bauelemente. Der Einleger, der beispielsweise aus glasfaserverstärktem Kunststoff ausgebildet ist, wird bei der Belegung des Schalenkernmaterials mit eingelegt und infundiert. Die Aussparung im Einleger, in die die Elektronikbauteile eingesetzt werden, kann dabei verschlossen sein, um das Eindringen von Harz zu vermeiden. Der Einleger weist gemäß weiteren Ausführungsformen einen festen Kunststoff auf. Beispielsweise ist der Einleger aus Polyurethan. Die Elektronikbauteile werden während der Herstellung des Rotorblattschalenkörpers noch nicht mit eingelegt. Die Elektronikbaugruppe, die beispielsweise die Funkenstrecke aufweist, wird dann nachträglich am fertigen Rotorblatt eingebracht.

Gemäß zumindest einer Ausführungsform umfasst das Kontaktieren der Überspannungsschutzvorrichtung ein Einbringen eines ersten Kontakts durch die Außenschalenlage. Eine elektrische Verbindung zwischen dem ersten Kontakt und einem ersten Anschluss der Überspannungsschutzvorrichtung wird ausgebildet. Ein zweiter Kontakt wird durch die Außenschalenlage eingebracht. Eine elektrische Verbindung zwischen dem zweiten Kontakt und einem zweiten Anschluss der Überspannungsschutzvorrichtung wird ausgebildet. Somit ist eine Verbindung der Überspannungsschutzvorrichtung von außerhalb des Rotorblatts möglich. Auf eine Kabelführung im Inneren des Rotorblatts kann verzichtet werden.

Gemäß zumindest einer Ausführungsform umfasst das Kontaktieren der Überspannungsschutzvorrichtung ein Einbringen des ersten Kontakts durch die Innenschalenlage. Eine elektrische Verbindung zwischen dem ersten Kontakt und einem ersten Anschluss der Überspannungsschutzvorrichtung wird ausgebildet. Der zweite Kontakt wird durch die Innenschalenlage eingebracht. Eine elektrische Verbindung zwischen dem zweiten Kontakt und einem zweiten Anschluss der Überspannungsschutzvorrichtung wird ausgebildet. Somit ist eine Verbindung der Überspannungsschutzvorrichtung von innerhalb des Rotorblatts möglich. Auf eine Kabelführung auf der Außenseite des Rotorblatts kann verzichtet werden.

Weitere Vorteile, Merkmale und Weiterbildungen ergeben sich aus den nachfolgenden, in Verbindung mit den Figuren erläuterten Beispielen. Gleiche, gleichartige oder gleich wirkende Elemente können in den Figuren mit den gleichen Bezugszeichen versehen sein. Die Figuren und die Größenverhältnisse der in den Figuren dargestellten Elemente untereinander sind nicht als maßstäblich zu betrachten.

Es zeigen:
- Figur 1: eine schematische Darstellung einer Windenergieanlage gemäß einem Ausführungsbeispiel,
- Figuren 2 bis 5: schematische Darstellungen verschiedener Schritte eines Herstellungsverfahrens gemäß einem Ausführungsbeispiel, und
- Figuren 6 bis 9: schematische Darstellungen verschiedener Schritte eines Herstellungsverfahrens gemäß einem weiteren Ausführungsbeispiel.

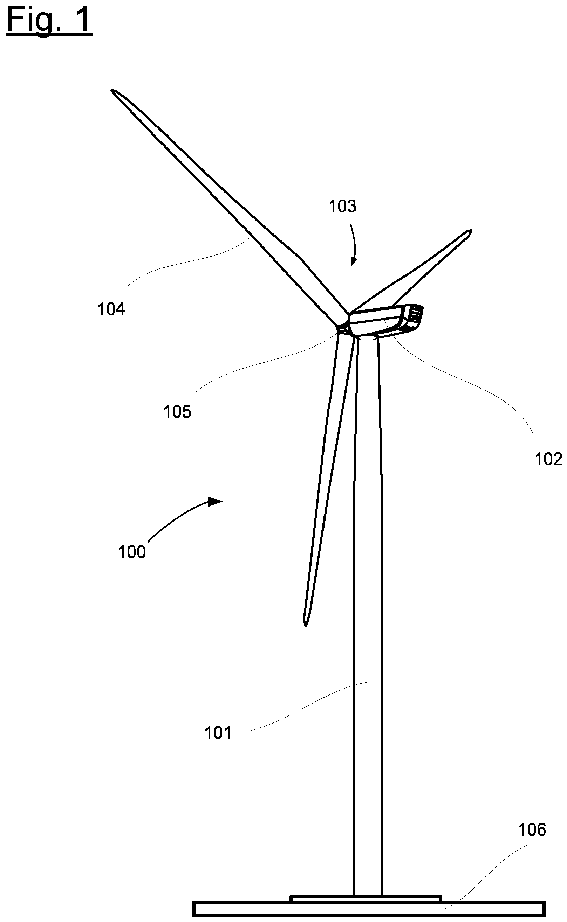

Figur 1 zeigt eine schematische Darstellung einer Windenergieanlage 100 gemäß einem Ausführungsbeispiel. Die Windenergieanlage 100 weist einen Turm 101 auf. Der Turm 101 ist mittels eines Fundaments 106 auf einem Untergrund befestigt. An einem dem Untergrund gegenüberliegenden Ende des Turms 101 ist eine Gondel 102 drehbar gelagert.

Die Gondel 102 weist beispielsweise einen Generator auf, der über eine Rotorwelle (nicht gezeigt) mit einem Rotor 103 gekoppelt ist. Der Rotor 103 weist ein oder mehrere Rotorblätter 104 auf, die an einer Rotornabe 105 angeordnet sind. Der Rotor 103 wird im Betrieb durch eine Luftströmung, beispielsweise Wind, der entlang einer Hauptströmungsrichtung einströmt, in Rotation versetzt. Diese Rotationsbewegung wird über die Rotorwelle und gegebenenfalls ein Getriebe zu dem Generator übertragen. Der Generator wandelt die kinetische Energie des Rotors in elektrische Energie um.

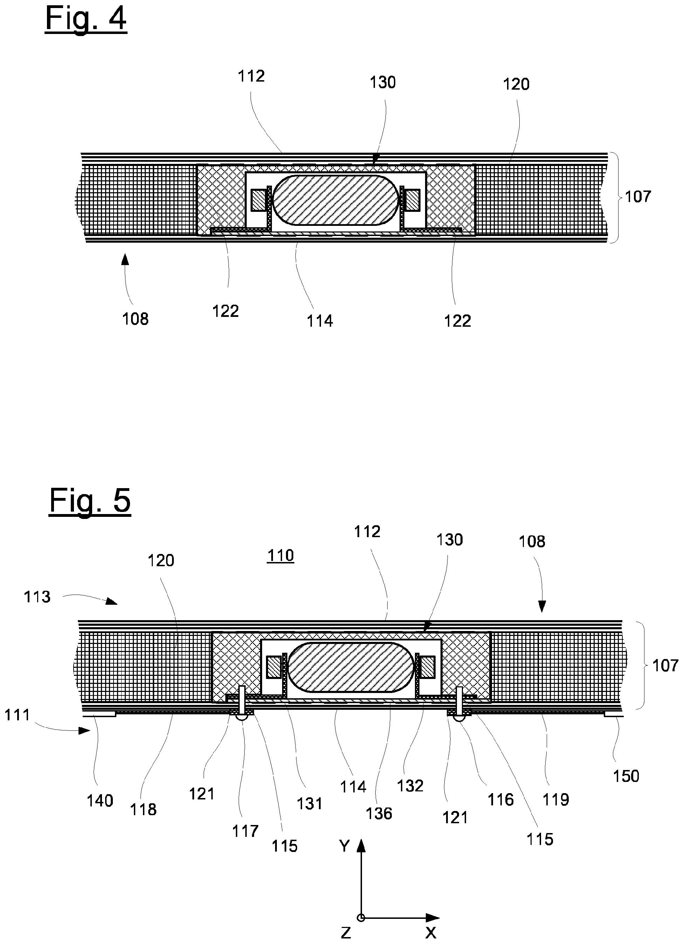

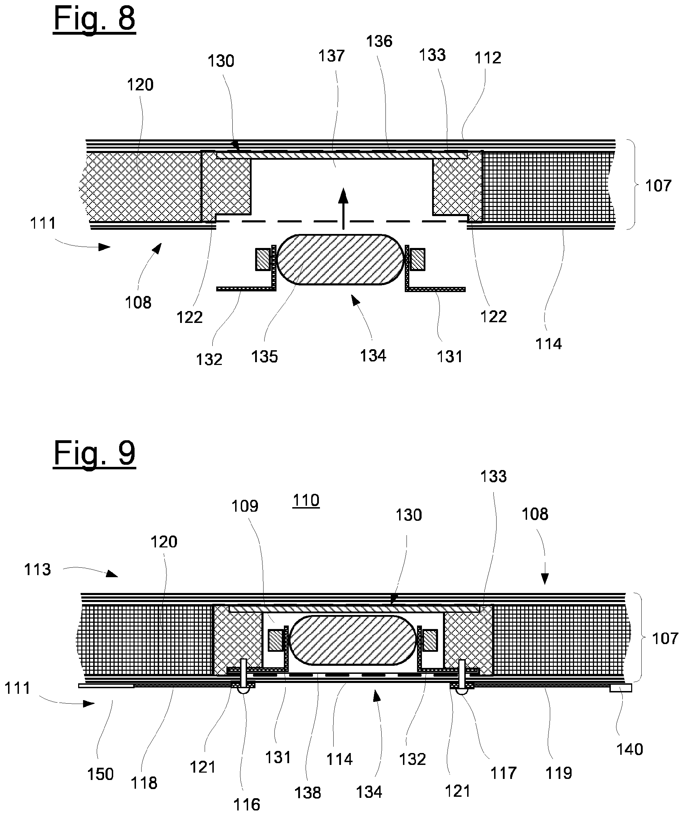

An den Rotorblättern 104 können jeweils elektrisch leitfähige Komponenten, beispielsweise Sensoren oder Heizelemente, vorgesehen sein. Zum Schutz der Komponenten ist eine Überspannungsschutzvorrichtung 130 (Figuren 5 und 9) installiert. Die Überspannungsschutzvorrichtung 130 dient zum Schutz der Komponenten vor zu hohen elektrischen Spannungen, wie sie beispielsweise bei Blitzeinschlägen auftreten können.

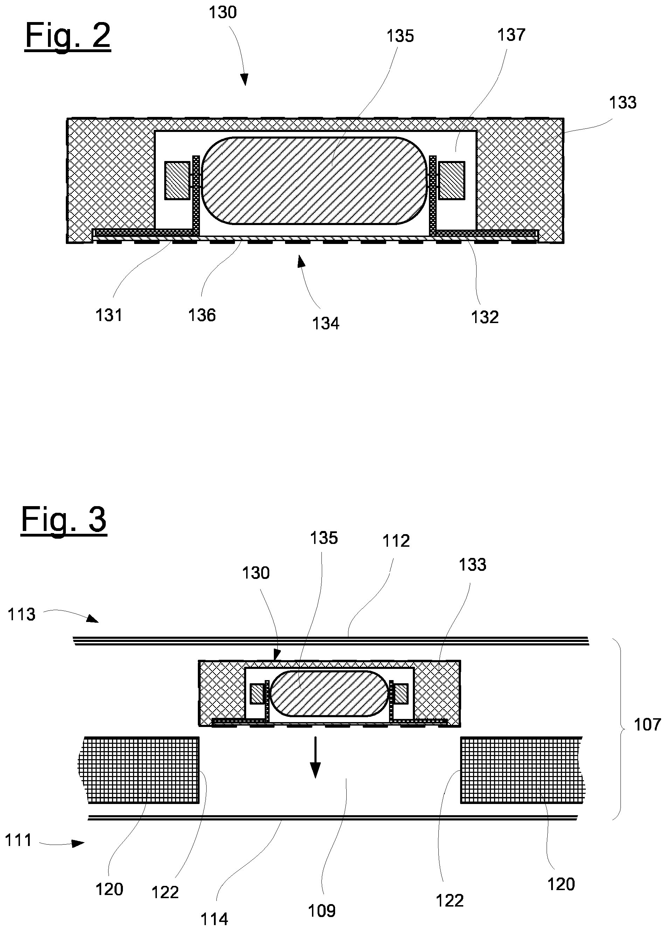

Figur 2 zeigt die Überspannungsschutzvorrichtung 130 gemäß einem Ausführungsbeispiel. Die Überspannungsschutzvorrichtung 130 ist als komplettes Bauelement ausgebildet.

Die Überspannungsschutzvorrichtung 130 weist einen Einleger 133 und eine Elektronikbaugruppe 134 auf. Die Elektronikbaugruppe 134 ist von dem Einleger 133 gehalten. Die Elektronikbaugruppe 134 ist in einer Aussparung 137 des Einlegers 133 angeordnet. Der Einleger 133 stellt eine Schnittstelle zur Montage der Überspannungsschutzvorrichtung 130 dar und ist beispielsweise aus einem glasfaserverstärkten Kunststoff gefertigt.

Die Elektronikbaugruppe 134 weist eine Vorrichtung zum Überspannungsschutz auf, beispielsweise eine Funkenstrecke 135. Auch andere Elemente zum Überspannungsschutz sind denkbar, beispielsweise auf Halbleiterbasis.

Die Funkenstrecke 135 ist über einen ersten Anschluss 131 und über einen zweiten Anschluss 132 elektrisch mit den Komponenten verbindbar. Die Funkenstrecke 135 ist ausgebildet zum Potentialausgleich zwischen zwei oder mehreren elektrisch leitfähigen Komponenten.

Die Überspannungsschutzvorrichtung 130 wird insbesondere in einem Rotorblatt 104 der Windenergieanlage 100 eingesetzt. Hierzu wird die Überspannungsschutzvorrichtung 130 in ein Kernmaterial 120 eines Rotorblattschalenkörpers 108 eingesetzt, wie in Figur 3 dargestellt. Die
Überspannungsschutzvorrichtung 130 wird als komplettes Bauelement in eine dafür vorgesehene Aussparung 109 des Kernmaterials 120 eingesetzt und weist den elektrisch isolierenden Einleger 133 sowie die Funkenstrecke 135 auf. Die Funkenstrecke 135 ist fest im Einleger 133 montiert.

Die Montage der Überspannungsschutzvorrichtung 130 erfolgt gemäß einem Ausführungsbeispiel formschlüssig im Kernmaterial 120. Alternativ oder zusätzlich ist eine stoffschlüssige Montage möglich, beispielsweise mittels einer Verklebung oder durch ein Vakuuminjektionsverfahren.

Zur Fertigung des Rotorblattschalenkörpers 108 werden Außenschalenlagen 114 in eine Schalenform (nicht dargestellt) eingelegt. Im fertigen Rotorblatt 104 befinden sich die Außenschalenlagen 114 auf der der Umgebung zugewandten Außenseite 111 der Rotorblattschale 107. Auf die Außenschalenlagen 114 wird das Kernmaterial 120 aufgelegt. Das Kernmaterial 120 weist die Aussparung 109 auf. Wände 122 des Kernmaterials 120 begrenzen die Aussparung 109. Die Überspannungsschutzvorrichtung 130 wird in die Aussparung 109 eingebracht, sodass sie in Kontakt mit den Wänden 122 ist. Die Wände 122 halten die Überspannungsschutzvorrichtung 130 in der Aussparung 109. Auf eine den Außenschalenlagen 114 gegenüberliegende Seite des Kernmaterials 120 werden Innenschalenlagen 112 aufgebracht. Die Innenschalenlagen 112 befinden sich im fertigen Rotorblatt 104 auf der einem Innenraum 110 (Figur 5) zugewandten Innenseite 113 der Rotorblattschale 107. Die Innenschalenlagen 112 umgeben den Innenraum 110 zumindest teilweise.

Figur 4 zeigt den Rotorblattschalenkörper 108 mit der Überspannungsschutzvorrichtung 130. Das Kernmaterial 120, die Innenschalenlagen 112 und die Außenschalenlagen 114 bilden den Rotorblattschalenkörper 108. Der Rotorblattschalenkörper 108 weist die Aussparung 109 auf, in der die
Überspannungsschutzvorrichtung 130 angeordnet ist. Die Innenschalenlagen 112, das Kernmaterial 120 und die Außenschalenlagen 114 sind miteinander verbunden, beispielsweise mittels eines Vakuuminfusionsverfahrens.

Figur 5 zeigt ein Detail des fertigen Rotorblatts 104 in Schnittansicht.

Der Innenraum 110 des Rotorblatts 104 ist frei von Kabeln beziehungsweise Zuleitungen zur
Überspannungsschutzvorrichtung 130. Die
Überspannungsschutzvorrichtung 130 ist an einer dem Innenraum 110 zugewandten Innenseite 113 der Rotorblattschale 107 frei von Kabeln und Zuführungen. Die Innenschalenlagen 112 bedecken die Überspannungsschutzvorrichtung 130 und das Kernmaterial 120 in Richtung der Innenseite 113 vollständig und insbesondere ohne Unterbrechungen.

An der Außenseite 111, die der Innenseite 113 gegenüberliegt, ist die Überspannungsschutzvorrichtung 130 kontaktiert.

An der Außenseite 111 sind auf den Außenschalenlagen 114 ein erster Leiter 118 und ein zweiter Leiter 119 vorgesehen. Der erste Leiter 118 und der zweite Leiter 119 sind jeweils elektrisch leitfähig. Der erste Leiter 118 und der zweite Leiter 119 sind jeweils mit einer elektrischen Komponente des Rotorblatts 104 und/oder der Windenergieanlage 100 verbunden. Beispielsweise ist der erste Leiter 118 mit einem Blitzableiter 140 des Rotorblatts 104 und der zweite Leiter 119 elektrisch mit einer Heizeinrichtung 150 des Rotorblatts 104 verbunden.

Der erste Leiter 118 ist mittels eines ersten Kontakts 116 mit dem ersten Anschluss 131 der
Überspannungsschutzvorrichtung 130 elektrisch verbunden. Der erste Kontakt 116 ist beispielsweise ein Kontaktstift und/oder eine elektrische Leitung. Beispielsweise ist ein Distanzstück 121 vorgesehen, um den ersten Kontakt 116 zu halten.

Der zweite Leiter 119 ist mittels eines zweiten Kontakts 117 mit dem zweiten Anschluss 132 der
Überspannungsschutzvorrichtung 130 elektrisch verbunden. Auch hier ist beispielsweise ein Distanzstück 121 vorgesehen.

Der erste Kontakt 116 und der zweite Kontakt 117 dienen jeweils zum Anschließen der Überspannungsschutzvorrichtung 130 an elektrische Komponenten auf der Außenseite 111 der Rotorblattschale 107. Hierzu reichen der erste Kontakt 116 und der zweite Kontakt 117 von der Außenseite 111 durch Unterbrechungen 115 in der Außenschalenlage 114 zur Überspannungsschutzvorrichtung 130. Gemäß weiteren Ausführungsbeispielen sind die Leiter 118, 119 und/oder die Kontakte 116, 117 in Richtung der Außenseite 111 von weiteren Elementen bedeckt, wie beispielsweise einem Schutzlack oder ähnlichem.

Gemäß weiteren Ausführungsbeispielen ist die Überspannungsschutzvorrichtung 130 andersrum als in den Figuren 3, 4 und 5 dargestellt in das Kernmaterial 120 eingesetzt, sodass der erste Anschluss 131 und der zweite Anschluss 132 dem Innenraum 110 zugewandt sind. Die Kontaktierung erfolgt korrespondieren zu dem oben Erläuterten, jedoch nicht durch die Außenschalenlage 114 sondern durch die Innenschalenlage 112. Somit sind in der Figur 5 beispielsweise die Innenseite 113 und die Außenseite 111 vertauscht.

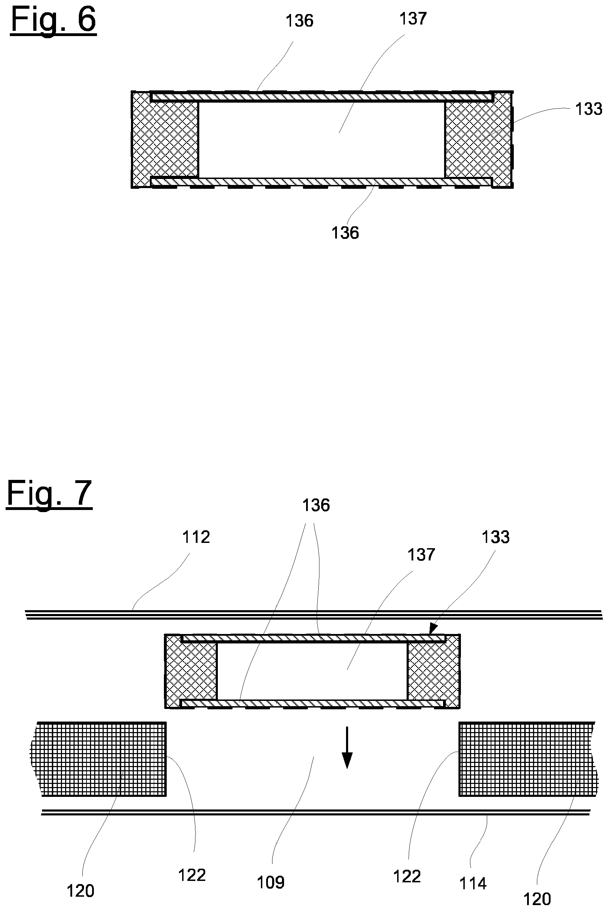

Die Figuren 6 bis 9 zeigen eine alternative Herstellung des Rotorblattschalenkörpers 108 gemäß einem Ausführungsbeispiel. Die fertige Rotorblattschale 107 (Figur 9) entspricht im Wesentlichen dem Ausführungsbeispiel wie in Figur 5 dargestellt. Im Folgenden wird vorrangig auf Unterschiede des Herstellungsverfahrens und des Rotorblattschalenkörpers 108 eingegangen.

Zunächst wird der Einleger 133 als eigenständig separates Bauelement ohne die Elektronikbaugruppe 134 bereitgestellt, wie in Figur 6 dargestellt. Der Einleger 133 weist die Aussparung 137 auf. Gemäß dem Ausführungsbeispiel ist die Aussparung 137 auf den der Innenseite 113 und der Außenseite 111 des Rotorblattschalenkörpers 108 zugewandten Seiten mit einer Versiegelung 136 abgedeckt, die ein Eindringen von Harz während der Vakuuminfusion der Rotorblattschale 107 verhindert und beim Einbau bzw. Austausch der Elektronikbaugruppe 134 entfernt werden kann.

Figur 7 zeigt das Einlegen des Einlegers 133 in die Aussparung 109 des Kernmaterials 120. Die Versiegelungen 136 der Aussparung 137 sind den Innenschalenlagen 112 bzw. den Außenschalenlagen 114 zugewandt. Der Einleger 133 wird eingesetzt. Die Aussparung 137 ist in der nachfolgenden Zusammenfügung des Kernmaterials 120 mit den
Innenschalenlagen 112 und den Außenschalenlage 114 durch die Versiegelung 136 gegen eindringendes Harz geschützt.

Der Rotorblattschalenkörper 108 weist somit den Einleger 133 auf, der von dem Kernmaterial 120, der Innenschalenlage 112 und der Außenschalenlage 114 eingeschlossen ist, wie in Figur 8 gezeigt. Die Aussparung 137 ist noch frei.

Entsprechend Fig. 8 werden nachfolgend die Außenschalenlagen 114 und die Versiegelung 136 geöffnet, sodass die Elektronikbaugruppe 134 mit der Funkenstrecke 135 in die Aussparung 137 von außen eingesetzt werden kann.

Die Elektronikbaugruppe 134 wird aus Richtung der Außenseite 111 in die Aussparung 137 des Einlegers 133 eingebracht. Die Innenschalenlagen 112 bleiben unversehrt und decken stets den Einleger 133 und das Kernmaterial 120 in Richtung zum Innenraum 110 des Rotorblatts 104 vollständig ab.

Der fertige Rotorblattschalenkörper 108, wie in Figur 9 dargestellt, entspricht im Wesentlichen dem Rotorblattschalenkörper 108, wie in Figur 5 dargestellt. Beispielsweise sind an der Außenseite 111 die Elektronikbaugruppe 134 und der Einleger 133 wieder mit den Außenschalenlagen 114 bedeckt. Auch eine Abdeckung 138 mit einem anderen Material, beispielsweise einem luftdichten Material, ist möglich, um bei der Vakuuminfusion der Außenschalenlagen 114 ein Eindringen von Harz in die Aussparung 109 zu verhindern. Der Einleger 133 dient somit während der Herstellung als eine Art Platzhalter. Nachfolgend sind unterschiedliche Elektronikbaugruppen 134 in den Einleger 133 einbringbar und mit den Leitern 118, 119 elektrisch verbindbar.

Die Rotorblattschale 107 für das Rotorblatt 104 weist einen Rotorblattschalenkörper 108 mit der Überspannungsschutzvorrichtung 130 auf, die von der Außenseite 111 kontaktierbar ist. An der Innenseite 113 und in dem Innenraum 110 ist es somit möglich, auf Kabel und elektrische Zuführungen zur Überspannungsschutzvorrichtung 130 zu verzichten. Die Überspannungsschutzvorrichtung 130 ist in den Rotorblattschalenkörper 108 implementiert und insbesondere nur von außen kontaktiert. Somit sind die Kontakte und Zuleitungen vor mechanischen Beschädigungen geschützt und insbesondere harzfrei.

Im Servicefall ist die Überspannungsschutzvorrichtung 130 von außen zugänglich. Beispielsweise ist es auch möglich, die Überspannungsschutzvorrichtung 130 von der Außenseite 111 her auf eine Funktionsfähigkeit zu testen. Auf ein Öffnen der Rotorblattschale 107 zum Zugang zu der
Überspannungsschutzvorrichtung 130 kann verzichtet werden. Somit ist auch der damit verbundene Arbeitsaufwand vermeidbar.

Gemäß einem weiteren, nicht explizit dargestellten Ausführungsbeispiel wird die Überspannungsschutzvorrichtung 130 in der gleichen Weise wie in Fig. 7 gezeigt in den Rotorblattschalenkörper 108 eingesetzt. Im Verfahrensschritt entsprechend der Figur 8 werden die Innenschalenlagen 112 und die darunter liegende Versiegelung 136 geöffnet, wodurch die Aussparung 137 nicht von der Außenseite 111 sondern von der Innenseite 113 des Rotorblattschalenkörpers 108 zugänglich ist. Die Überspannungsschutzvorrichtung ist folglich im Betrieb andersherum als in der Figur 9 dargestellt in den Rotorblattschalenkörper 108 eingesetzt, sodass der erste Anschluss 131 und der zweite Anschluss 132 dem Innenraum 110 zugewandt sind. Das Einsetzen der Elektronikbaugruppe 134 in den Einleger erfolgt insbesondere von der Innenseite 113 her. Die Kontaktierung erfolgt korrespondierend zu dem oben Erläuterten.

Die Überspannungsschutzvorrichtung 130 ist in die Rotorblattschale 107 integriert. Die
Überspannungsschutzvorrichtung 130 ist insbesondere nicht im Innenraum 110 der Rotorblattschale 107 beziehungsweise des Rotorblatts 104 angeordnet. Somit ergibt sich ein von Kabeln und Zuleitungen sowie von der Überspannungsschutzvorrichtung 130 freier Innenraum 110.

Sämtliche Kontaktierungen der Überspannungsschutzvorrichtung 130 sind gemäß Ausführungsbeispielen von außen gesetzt und können von außen gewartet werden. Ein Tausch einer defekten Überspannungsschutzvorrichtung 130 beziehungsweise einer defekten Elektronikbaugruppe 134 ist ebenfalls von der Außenseite 111 her möglich, ohne dass die gesamte Rotorblattschale 107 geöffnet werden muss. Insbesondere kann der Einleger 133 in dem Rotorblattschalekörper 108 bleiben und nur die Elektronikbaugruppe 134 ausgetauscht werden.

Wie in Verbindung mit den Figuren 2 bis 5 erläutert, ist es möglich, den Einleger 133 mit der Elektronikbaugruppe 134 als vorgefertigtes Bauelement zu verwenden. Die
Elektronikbaugruppe 134 ist im Einleger 133 eingebettet. Hierdurch ist ein geringer Montageaufwand realisierbar. Zudem ist die Überspannungsschutzvorrichtung 130 robust ausgeführt.

Wie in Verbindung mit den Figuren 6 bis 9 erläutert, ist es auch möglich, die Elektronikbaugruppe 134 nicht während der Fertigung des Rotorblattschalenkörpers 108 einzusetzen. Somit ist eine flexiblere Montage während der Produktion ermöglicht. Die Elektronikbaugruppe 134 wird nachträglich am fertigen Rotorblatt 104 beziehungsweise am fertigen Rotorblattschalenkörper 108 montiert. Der Einleger 133 wird während der Belegung mit dem Kernmaterial 120, den Innenschalenlagen 112 und den Außenschalenlagen 114 mit eingelegt. Es müssen keine Kabelanschlüsse vorgesehen werden. Somit ist ein flexibler Einsatz unterschiedlicher Elektronikbaugruppen 134 möglich.

Insgesamt können die Anschlusskabel innerhalb des Rotorblatts 104 reduziert werden. Somit ist auch ein Montageaufwand reduzierbar. Das Risiko, dass Verkabelungen durch Harzreste innerhalb des Rotorblatts 104 beschädigt werden, ist vermeidbar. Es entfallen notwendige Schutzabdeckungen für die Überspannungsvorrichtung 130 im Inneren des
Rotorblattschalenkörpers 108.

Beispielsweise ist die Überspannungsschutzvorrichtung 130 dazu ausgelegt, bei einer elektrischen Spannung oberhalb der Heizspannung der Heizeinrichtung 150 durchzuschalten. Beispielsweise weist die Überspannungsschutzvorrichtung 130 eine Durchlassspannung von größer als 600 V bis hin zu 1 kV oder mehr auf. Die Dicke des Einlegers 133 ist auf eine Dicke des Kernmaterials 120 abgestimmt und beträgt beispielsweise zwischen 10 mm und 50 mm.

Die Rotorblattschale 107 mit der
Überspannungsschutzvorrichtung 130 ermöglicht einen Potentialausgleich zweier elektrisch leitfähiger Komponenten des Rotorblatts 104 bei einfacher Montage und geringem Wartungsaufwand.

### Bezugszeichen:

- 100: Windenergieanlage
- 101: Turm
- 102: Gondel
- 103: Rotor
- 104: Rotorblatt
- 105: Rotornabe
- 106: Fundament
- 107: Rotorblattschale
- 108: Rotorblattschalenkörper
- 109: Aussparung
- 110: Innenraum
- 111: Außenseite
- 112: Innenschalenlage
- 113: Innenseite
- 114: Außenschalenlage
- 115: Unterbrechungen
- 116: erster Kontakt
- 117: zweiter Kontakt
- 118: erster Leiter
- 119: zweiter Leiter
- 120: Kernmaterial
- 121: Distanzstück
- 122: Wand
- 130: Überspannungsschutzvorrichtung
- 131: erster Anschluss
- 132: zweiter Anschluss
- 133: Einleger
- 134: Elektronikbaugruppe
- 135: Funkenstrecke
- 136: Versiegelung
- 137: Aussparung
- 138: Abdeckung
- 140: Blitzableiter
- 150: Heizeinrichtung

## Patentansprüche

1. Rotorblattschale für ein Rotorblatt (104) einer Windenergieanlage (100), aufweisend:
- einen Rotorblattschalenkörper (108) mit einer Aussparung (109), der einen Innenraum (110) des Rotorblatts (104) umgibt und der eine dem Innenraum (110) abgewandte Außenseite (111) aufweist,
- eine Überspannungsschutzvorrichtung (130) mit einem ersten Anschluss (131) und einem zweiten Anschluss (132), **dadurch gekennzeichnet, dass** die Überspannungsschutzvorrichtung (130) vollständig innerhalb der Aussparung (109) angeordnet und von dem Innenraum (110) oder der Außenseite (111) der Rotorblattschale (107) elektrisch kontaktierbar ist.

2. Rotorblattschale nach Anspruch 1, bei der die Überspannungsschutzvorrichtung (130) so in der Aussparung (109) angeordnet ist, dass die beiden Anschlüsse (131, 132) der Außenseite (111) zugewandt sind und die Überspannungsschutzvorrichtung (130) von der Außenseite (111) der Rotorblattschale (107) elektrisch kontaktierbar ist.

3. Rotorblattschale nach Anspruch 2, bei der der Rotorblattschalenkörper (108) eine Innenschalenlage (112) aufweist, die auf einer dem Innenraum (110) zugewandten Innenseite (113) des Rotorblattschalenkörpers (108) angeordnet ist und die die Überspannungsschutzvorrichtung (130) zum Innenraum (110) vollständig bedeckt.

4. Rotorblattschale nach Anspruch 2 oder 3, bei der der Rotorblattschalenkörper (108) eine Außenschalenlage (114) aufweist, die an der Außenseite (111) des Rotorblattschalenkörpers (108) angeordnet ist, wobei die Außenschalenlage (114) bereichsweise unterbrochen ist zum elektrischen Kontaktieren der Überspannungsschutzvorrichtung (130) .

5. Rotorblattschale nach Anspruch 4, die einen ersten (116) und einen zweiten Kontakt (117) aufweist, wobei der erste Kontakt (116) von der Außenseite (111) der Rotorblattschale (107) durch die Außenschalenlage (114) zum ersten Anschluss (131) reicht und der zweite Kontakt (117) von der Außenseite (111) der Rotorblattschale (107) durch die Außenschalenlage (114) zum zweiten Anschluss (132) reicht.

6. Rotorblattschale nach einem der Ansprüche 2 bis 5, aufweisend einen ersten Leiter (118) und einen zweiten Leiter (119) auf der Außenseite (111) der Rotorblattschale (107), wobei der erste Leiter (118) mit dem ersten Anschluss (131) elektrisch verbunden ist und der zweite Leiter (119) mit dem zweiten Anschluss (132) elektrisch verbunden ist.

7. Rotorblattschale nach Anspruch 1, bei der die Überspannungsschutzvorrichtung (130) so in der Aussparung (109) angeordnet ist, dass die beiden Anschlüsse (131, 132) dem Innenraum (110) zugewandt sind und die Überspannungsschutzvorrichtung (130) von dem Innenraum (110) der Rotorblattschale (107) elektrisch kontaktierbar ist.

8. Rotorblattschale nach Anspruch 7, bei der der Rotorblattschalenkörper (108) eine Außenschalenlage (114) aufweist, die auf der Außenseite (111) des Rotorblattschalenkörpers (108) angeordnet ist und die die Überspannungsschutzvorrichtung (130) zur Außenseite (111) vollständig bedeckt.

9. Rotorblattschale nach Anspruch 7 oder 8, bei der der Rotorblattschalenkörper (108) eine Innenschalenlage (112) aufweist, die an einer dem Innenraum (110) zugewandten Innenseite (113) des Rotorblattschalenkörpers (108) angeordnet ist, wobei die Innenschalenlage (112) bereichsweise unterbrochen ist zum elektrischen Kontaktieren der Überspannungsschutzvorrichtung (130).

10. Rotorblattschale nach Anspruch 9, die einen ersten (116) und einen zweiten Kontakt (117) aufweist, wobei der erste Kontakt (116) von der Innenseite (110) der Rotorblattschale (107) durch die Innenschalenlage (112) zum ersten Anschluss (131) reicht und der zweite Kontakt (117) von der Innenseite (113) der Rotorblattschale (107) durch die Innenschalenlage (112) zum zweiten Anschluss (132) reicht.

11. Rotorblattschale nach einem der Ansprüche 7 bis 10, aufweisend einen ersten Leiter (118) und einen zweiten Leiter (119) auf der Innenseite (113) der Rotorblattschale (107), wobei der erste Leiter (118) mit dem ersten Anschluss (131) elektrisch verbunden ist und der zweite Leiter (119) mit dem zweiten Anschluss (132) elektrisch verbunden ist.

12. Rotorblattschale nach einem der Ansprüche 1 bis 11, bei der der erste Anschluss (131) mit einem Blitzableiter (140) für das Rotorblatt (104) elektrisch verbunden ist und der zweite Anschluss (132) mit einer Heizeinrichtung (150) für das Rotorblatt (104) elektrisch verbunden ist.

13. Rotorblattschale nach einem der Ansprüche 1 bis 12, bei der die Überspannungsschutzvorrichtung (130) einen Einleger (133) und eine Elektronikbaugruppe (134) aufweist, wobei der Einleger (133) in der Aussparung (109) angeordnet ist und von dem Rotorblattschalenkörper (108) mechanisch gehalten ist und die Elektronikbaugruppe (134) in dem Einleger (133) angeordnet ist und den ersten Anschluss (131) sowie den zweiten Anschluss (132) aufweist.

14. Rotorblattschale nach einem der Ansprüche 1 bis 13, bei der die Überspannungsvorrichtung (130) eine Funkenstrecke (135) zwischen dem ersten Anschluss (131) und dem zweiten Anschluss (132) aufweist.

15. Verfahren zum Herstellen einer Rotorblattschale (107) für ein Rotorblatt (104) einer Windenergieanlage (100), umfassend:
- Bereitstellen eines Rotorblattschalenkörpers (108) umfassend ein Kernmaterial (120) mit einer Aussparung (109),
- Einbringen einer Überspannungsschutzvorrichtung (130) in die Aussparung (109),
- Abdecken der Überspannungsschutzvorrichtung (130) und des Kernmaterials (120) auf einer einem Innenraum (110) des Rotorblatts (104) zugewandten Innenseite (113) des Rotorblattschalenkörpers (108) mit einer Innenschalenlage (112) und auf einer gegenüberliegenden Außenseite (111) mit einer Außenschalenlage (114),
- Kontaktieren der Überspannungsschutzvorrichtung (130) von der Innenseite (113) oder der Außenseite (111) der Rotorblattschale (107).

16. Verfahren nach Anspruch 15, bei dem das Einbringen der Überspannungsschutzvorrichtung (130) in die Aussparung (109) umfasst:
- Bereitstellen der Überspannungsschutzvorrichtung (130) als eigenständiges Bauelement umfassend einen Einleger (133) und eine Elektronikbaugruppe (134),
- Einsetzen des Bauelements in die Aussparung (109), sodass das Bauelement mit dem Kernmaterial (120) in Kontakt ist,
- Verbinden der Überspannungsschutzvorrichtung (130), des Kernmaterials (120), der Innenschalenlage (112) und der Außenschalenlage (114) durch ein Vakuuminfusionsverfahren.

17. Verfahren nach Anspruch 15, bei dem das Einbringen der Überspannungsschutzvorrichtung (130) in die Aussparung (109) umfasst:
- Bereitstellen eines Einlegers (133),
- Einsetzen des Einlegers (133) in die Aussparung (109), sodass der Einleger (133) mit dem Kernmaterial (120) in Kontakt ist,
- Verbinden des Einlegers (133), des Kernmaterials (120), der Innenschalenlage (112) und der Außenschalenlage (114) durch ein Vakuuminfusionsverfahren,
- Bereitstellen einer Elektronikbaugruppe (134),
- Einsetzen der Elektronikbaugruppe (134) in den Einleger (133), nachdem die Außenschalenlage (114) oder die Innenschalenlage (112) im Bereich des Einlegers (133) geöffnet wurde.

18. Verfahren nach einem der Ansprüche 15 bis 17, bei dem das Kontaktieren der Überspannungsschutzvorrichtung (130) umfasst:
- Einbringen eines ersten Kontakts (116) durch die Außenschalenlage (114) oder die Innenschalenlage (112),
- Ausbilden einer elektrischen Verbindung zwischen dem ersten Kontakt (116) und einem ersten Anschluss (131) der Überspannungsschutzvorrichtung (130),
- Einbringen eines zweiten Kontakts (117) durch die Außenschalenlage (114) oder die Innenschalenlage (112),
- Ausbilden einer elektrischen Verbindung zwischen dem zweiten Kontakt (117) und einem zweiten Anschluss (132) der Überspannungsschutzvorrichtung (130).

## Claims

1. A rotor blade shell for a rotor blade (104) of a wind turbine (100), including:
- a rotor blade shell body (108) having a recess (109) surrounding an interior space (110) of the rotor blade (104) and including an outer side (111) facing away from the interior space (110),
- an overvoltage protection device (130) having a first connection (131) and a second connection (132),
**characterized in that** the overvoltage protection device (130) is completely arranged within the recess (109) and is electrically contactable from the interior space (110) or the outer side (111) of the rotor blade shell (107).

2. The rotor blade shell according to claim 1, in which the overvoltage protection device (130) is arranged within the recess (109) such that the two connections (131, 132) are facing the outer side (111) and the overvoltage protection device (130) is electrically contactable from the outer side (111) of the rotor blade shell (107).

3. The rotor blade shell according to claim 2, in which the rotor blade shell body (108) includes an inner shell layer (112) which is arranged on an inner side (113) of the rotor blade shell body (108) facing the interior space (110) and completely covers the overvoltage protection device (130) toward the inner space (110).

4. The rotor blade shell according to claim 2 or 3, in which the rotor blade shell body (108) includes an outer shell layer (114) which is arranged on the outer side (111) of the rotor blade shell body (108), wherein the outer shell layer (114) is interrupted in sections for electrically contacting the overvoltage protection device (130).

5. The rotor blade shell according to claim 4, including a first (116) and a second contact (117), wherein the first contact (116) reaches from the outer side (111) of the rotor blade shell (107) through the outer shell layer (114) to the first connection (131), and the second contact (117) reaches from the outer side (111) of the rotor blade shell (107) through the outer shell layer (114) to the second connection (132) .

6. The rotor blade shell according to any one of claims 2 to 5, including a first conductor (118) and a second conductor (119) on the outer side (111) of the rotor blade shell (107), wherein the first conductor (118) is electrically connected to the first connection (131), and the second conductor (119) is electrically connected to the second connection (132).

7. The rotor blade shell according to claim 1, in which the overvoltage protection device (130) is arranged within the recess (109) such that the two connections (131, 132) are facing the interior space (110) and the overvoltage protection device (130) is electrically contactable from the interior space (110) of the rotor blade shell (107).

8. The rotor blade shell according to claim 7, in which the rotor blade shell body (108) includes an outer shell layer (114) which is arranged on the outer side (111) of the rotor blade shell body (108) and completely covers the overvoltage protection device (130) toward the outer side (111).

9. The rotor blade shell according to claim 7 or 8, in which the rotor blade shell body (108) includes an inner shell layer (112) which is arranged on an inner side (113) of the rotor blade shell body (108) facing the interior space, wherein the inner shell layer (112) is interrupted in sections for electrically contacting the overvoltage protection device (130).

10. The rotor blade shell according to claim 9, including a first (116) and a second contact (117), wherein the first contact (116) reaches from the inner side (110) of the rotor blade shell (107) through the inner shell layer (112) to the first connection (131), and the second contact (117) reaches from the inner side (113) of the rotor blade shell (107) through the inner shell layer (112) to the second connection (132) .

11. The rotor blade shell according to any one of claims 7 to 10, including a first conductor (118) and a second conductor (119) on the inner side (113) of the rotor blade shell (107), wherein the first conductor (118) is electrically connected to the first connection (131), and the second conductor (119) is electrically connected to the second connection (132).

12. The rotor blade shell according to any one of claims 1 to 11, in which the first connection (131) is electrically connected to a lightning rod (140) for the rotor blade (104), and the second connection (132) is electrically connected to a heating device (150) for the rotor blade (104).

13. The rotor blade shell according to any one of claims 1 to 12, in which the overvoltage protection device (130) includes an insert (133) and an electronic assembly (134), wherein the insert (133) is arranged within the recess (109) and is mechanically held by the rotor blade shell body (108), and the electronic assembly (134) is arranged within the insert (133) and includes both the first connection (131) and the second connection (132).

14. The rotor blade shell according to any one of claims 1 to 13, in which the overvoltage protection device (130) includes a spark gap (135) between the first connection (131) and the second connection (132).

15. A method for producing a rotor blade shell (107) for a rotor blade (104) of a wind turbine (100), comprising:
- providing a rotor blade shell body (108) comprising a core material (120) having a recess (109),
- introducing an overvoltage protection device (130) into the recess (109),
- covering the overvoltage protection device (130) and the core material (120) on an inner side (113) of the rotor blade shell body (108) facing an inner space (110) of the rotor blade (104) with an inner shell layer (112), and on an opposite outer side (111) with an outer shell layer (114),
- contacting the overvoltage protection device (130) from the inner side (113) or the outer side (111) of the rotor blade shell (107).

16. The method according to claim 15, in which the introducing of the overvoltage protection device (130) into the recess (109) comprises:
- providing the overvoltage protection device (130) as an autonomous component comprising an insert (133) and an electronic assembly (134),
- placing the component into the recess (109) such that the component is in contact with the core material (120),
- connecting the overvoltage protection device (130), the core material (120), the inner shell layer (112) and the outer shell layer (114) by means of a vacuum infusion process.

17. The method according to claim 15, in which the introducing of the overvoltage protection device (130) into the recess (109) comprises:
- providing an insert (133),
- placing the insert (133) into the recess (109) such that the insert (133) is in contact with the core material (120),
- connecting the insert (133), the core material (120), the inner shell layer (112) and the outer shell layer (114) by means of a vacuum infusion process,
- providing an electronic assembly (134),
- placing the electronic assembly (134) into the insert (133) after the outer shell layer (114) or the inner shell layer (112) has been opened in the area of the insert (133).

18. The method according to any one of claims 15 to 17, in which the contacting of the overvoltage protection device (130) comprises:
- introducing a first contact (116) through the outer shell layer (114) or the inner shell layer (112),
- forming an electrical connection between the first contact (116) and a first connection (131) of the overvoltage protection device (130),
- introducing a second contact (117) through the outer shell layer (114) or the inner shell layer (112),
- forming an electrical connection between the second contact (117) and a second connection (132) of the overvoltage protection device (130).

## Revendications

1. Coque de pale de rotor pour une pale de rotor (104) d'une éolienne (100), présentant :
- un corps de coque de pale de rotor (108) comportant un évidement (109) qui entoure un espace intérieur (110) de la pale de rotor (104) et qui présente un côté extérieur (111) opposé à l'espace intérieur (110),
- un dispositif parasurtenseur (130) comportant un premier raccord (131) et un deuxième raccord (132),
**caractérisé en ce que** le dispositif parasurtenseur (130) est disposé intégralement à l'intérieur de l'évidement (109) et peut être mis en contact électriquement depuis l'espace intérieur (110) ou le côté extérieur (111) de la coque de pale de rotor (107).

2. Coque de pale de rotor selon la revendication 1, dans laquelle le dispositif parasurtenseur (130) est disposé dans l'évidement (109) de telle manière que les deux raccords (131, 132) soient tournés vers le côté extérieur (111) et le dispositif parasurtenseur (130) puisse être mis en contact électriquement depuis le côté extérieur (111) de la coque de pale de rotor (107).

3. Coque de pale de rotor selon la revendication 2, dans laquelle le corps de coque de pale de rotor (108) présente une couche de coque intérieure (112) qui est disposée d'un côté intérieur (113) du corps de coque de pale de rotor (108) tourné vers l'espace intérieur (110) et qui recouvre intégralement le dispositif parasurtenseur (130) vers l'espace intérieur (110).

4. Coque de pale de rotor selon la revendication 2 ou 3, dans laquelle le corps de coque de pale de rotor (108) présente une couche de coque extérieure (114) qui est disposée au niveau du côté extérieur (111) du corps de coque de pale de rotor (108), sachant que la couche de coque extérieure (114) est interrompue par sections pour la mise en contact électrique du dispositif parasurtenseur (130).

5. Coque de pale de rotor selon la revendication 4, laquelle présente un premier (116) et un deuxième contact (117), sachant que le premier contact (116) s'étend du côté extérieur (111) de la coque de pale de rotor (107) au premier raccord (131) en passant par la couche de coque extérieure (114) et le deuxième contact (117) s'étend du côté extérieur (111) de la coque de pale de rotor (107) au deuxième raccord (132) en passant par la couche de coque extérieure (114).

6. Coque de pale de rotor selon l'une des revendications 2 à 5, présentant un premier conducteur (118) et un deuxième conducteur (119) du côté extérieur (111) de la coque de pale de rotor (107), sachant que le premier conducteur (118) est relié électriquement au premier raccord (131) et le deuxième conducteur (119) est relié électriquement au deuxième raccord (132) .

7. Coque de pale de rotor selon la revendication 1, dans laquelle le dispositif parasurtenseur (130) est disposé dans l'évidement (109) de telle manière que les deux raccords (131, 132) soient tournés vers l'espace intérieur (110) et le dispositif parasurtenseur (130) puisse être mis en contact électriquement depuis l'espace intérieur (110) de la coque de pale de rotor (107).

8. Coque de pale de rotor selon la revendication 7, dans laquelle le corps de coque de pale de rotor (108) présente une couche de coque extérieure (114) qui est disposée du côté extérieur (111) du corps de coque de pale de rotor (108) et qui recouvre intégralement le dispositif parasurtenseur (130) vers le côté extérieur (111).

9. Coque de pale de rotor selon la revendication 7 ou 8, dans laquelle le corps de coque de pale de rotor (108) présente une couche de coque intérieure (112) qui est disposée au niveau d'un côté intérieur (113) du corps de coque de pale de rotor (108) tourné vers l'espace intérieur (110), sachant que la couche de coque intérieure (112) est interrompue par sections pour la mise en contact électrique du dispositif parasurtenseur (130).

10. Coque de pale de rotor selon la revendication 9, laquelle présente un premier (116) et un deuxième contact (117), sachant que le premier contact (116) s'étend du côté intérieur (110) de la coque de pale de rotor (107) au premier raccord (131) en passant par la couche de coque intérieure (112) et le deuxième contact (117) s'étend du côté intérieur (113) de la coque de pale de rotor (107) au deuxième raccord (132) en passant par la couche de coque intérieure (112).

11. Coque de pale de rotor selon l'une des revendications 7 à 10, présentant un premier conducteur (118) et un deuxième conducteur (119) du côté intérieur (113) de la coque de pale de rotor (107), sachant que le premier conducteur (118) est relié électriquement au premier raccord (131) et le deuxième conducteur (119) est relié électriquement au deuxième raccord (132) .

12. Coque de pale de rotor selon l'une des revendications 1 à 11, dans laquelle le premier raccord (131) est relié électriquement à un parafoudre (140) pour la pale de rotor (104) et le deuxième raccord (132) est relié électriquement à un dispositif de chauffage (150) pour la pale de rotor (104).

13. Coque de pale de rotor selon l'une des revendications 1 à 12, dans laquelle le dispositif parasurtenseur (130) présente un dispositif d'insertion (133) et un ensemble de composants électroniques (134), sachant que le dispositif d'insertion (133) est disposé dans l'évidement (109) et est maintenu mécaniquement par le corps de coque de pale de rotor (108) et l'ensemble de composants électroniques (134) est disposé dans le dispositif d'insertion (133) et présente le premier raccord (131) ainsi que le deuxième raccord (132).

14. Coque de pale de rotor selon l'une des revendications 1 à 13, dans laquelle le dispositif parasurtenseur (130) présente un éclateur (135) entre le premier raccord (131) et le deuxième raccord (132).

15. Procédé de fabrication d'une coque de pale de rotor (107) pour une pale de rotor (104) d'une éolienne (100), comprenant :
- la mise à disposition d'un corps de coque de pale de rotor (108) comprenant un matériau d'âme (120) comportant un évidement (109),
- l'introduction d'un dispositif parasurtenseur (130) dans l'évidement (109),
- le recouvrement du dispositif parasurtenseur (130) et du matériau d'âme (120) d'un côté intérieur (113) du corps de coque de pale de rotor (108) tourné vers l'espace intérieur (110) de la pale de rotor (104) avec une couche de coque intérieure (112) et d'un côté extérieur (111) opposé avec une couche de coque extérieure (114),
- la mise en contact du dispositif parasurtenseur (130) depuis le côté intérieur (113) ou le côté extérieur (111) de la coque de pale de rotor (107).

16. Procédé selon la revendication 15, dans lequel l'introduction du dispositif parasurtenseur (130) dans l'évidement (109) comprend :
- la mise à disposition du dispositif parasurtenseur (130) comme composant autonome comprenant un dispositif d'insertion (133) et un ensemble de composants électroniques (134),
- la mise en place du composant dans l'évidement (109) de telle sorte que le composant soit en contact avec le matériau d'âme (120),
- la liaison du dispositif parasurtenseur (130), du matériau d'âme (120), de la couche de coque intérieure (112) et de la couche de coque extérieure (114) par un procédé d'infusion à vide.

17. Procédé selon la revendication 15, dans lequel l'introduction du dispositif parasurtenseur (130) dans l'évidement (109) comprend :
- la mise à disposition d'un dispositif d'insertion (133),
- la mise en place du dispositif d'insertion (133) dans l'évidement (109) de telle sorte que le dispositif d'insertion (133) soit en contact avec le matériau d'âme (120),
- la liaison du dispositif d'insertion (133), du matériau d'âme (120), de la couche de coque intérieure (112) et de la couche de coque extérieure (114) par un procédé d'infusion à vide,
- la mise à disposition d'un ensemble de composants électroniques (134),
- la mise en place de l'ensemble de composants électroniques (134) dans le dispositif d'insertion (133) après que la couche de coque extérieure (114) ou la couche de coque intérieure (112) a été ouverte dans la zone du dispositif d'insertion (133).

18. Procédé selon l'une des revendications 15 à 17, dans lequel la mise en contact du dispositif parasurtenseur (130) comprend :
- l'introduction d'un premier contact (116) par la couche de coque extérieure (114) ou la couche de coque intérieure (112),
- la constitution d'une connexion électrique entre le premier contact (116) et un premier raccord (131) du dispositif parasurtenseur (130),
- l'introduction d'un deuxième contact (117) par la couche de coque extérieure (114) ou la couche de coque intérieure (112),
- la constitution d'une connexion électrique entre le deuxième contact (117) et un deuxième raccord (132) du dispositif parasurtenseur (130).
